# EUROPÄISCHE PATENTSCHRIFT

(11) **EP 2 358 647 B1**
(45) Veröffentlichungstag und Bekanntmachung des Hinweises auf die Patenterteilung: **26.02.2014**
(21) Anmeldenummer: 09784082.1
(22) Anmeldetag: 14.12.2009
(51) Int. Cl.: C03B 17/06, C03B 5/26

(54) **VERFAHREN UND VORRICHTUNG ZUR HERSTELLUNG VON FLACHGLAS**
METHOD AND DEVICE FOR PRODUCING FLAT GLASS
PROCÉDÉ ET DISPOSITIF DE FABRICATION DE VERRE PLAT

(30) Priorität: 17.12.2008 DE 102008062602
(43) Veröffentlichungstag der Anmeldung: 24.08.2011
(73) Patentinhaber: Moravsky, Miroslav, 98501 Kalinovo (SK)
(72) Erfinder: Moravsky, Miroslav, 98501 Kalinovo (SK)
(74) Vertreter: Liedtke, Klaus
(86) Internationale Anmeldenummer: PCT/EP2009/067075
(87) Internationale Veröffentlichungsnummer: WO 2010/069918

(56) Entgegenhaltungen:
- EP-A1- 1 516 858
- DE-A1-102005 019 646
- JP-A- 2005 206 417
- US-A1- 2005 178 159

## Beschreibung

Erfindung betrifft ein Verfahren und eine Vorrichtung zur Herstellung von Flachglas mit einem Gießverfahren unter Verwendung einer Schmelzeinrichtung, eines Vorherdkanals zur Zuführung einer Glasschmelze zu einer Formgebungseinrichtung, bei dem die Glasschmelze einem formgebenden und ein Glasband führendes Walzen- und Rollensystem zufließt, wobei das Glasband von dem Vorherdkanal bis zu einem Ziehstein eine Verbreiterung auf die vorgesehene Breite des zu produzierenden Glasbandes bei sinkender Glasbandtiefe erfährt.

Bei diesem Prozess wird das in einer Schmelzanlage erschmolzene Glas über einen Vorherd der Formgebungsanlage zugeführt. Bei den bekannten Anlagen wird durch ein Paar von Walzen die Glasschmelze zu einem Glasband geformt. Zur Herstellung von Drahtglas wird vor den Hauptwalzen Maschendraht in das Glas einlegt. Spiegelglas wird mit Hilfe des Walzverfahrens unter Verwendung glatter Walzen hergestellt.
Von den zwei Hauptwalzen, deren Oberfläche auch Muster für Ornamentglas enthalten kann, gelangt der Glasstrang in eine Kühlbahn.

Mit diesem Prozess kann sowohl normales Walzglas als auch das Ausgangsmaterial für Platten aus Glaskeramik hergestellt werden, bei denen ein zweiter Prozess, die Keramisierung der Glasplatten, nachgeschaltet wird. Gläser zur Herstellung von Glaskeramik haben von den anderen Gläsern abweichende Zusammensetzungen, die durch die Keimbildung fördernde Bestandteile wie z.B. Li₂O und TiO₂ gekennzeichnet sind. Diese sind kristallisationsfreudig und verlangen eine besondere Temperaturführung bei der Vorbereitung der Formgebung mit Rücksicht auf ihre erhöhte Liquidustemperatur.

Da bei derartigen Produktionsprozessen die Formgebung der Glasschmelze in einem Spalt zwischen den zwei Hauptwalzen erfolgt, der tiefer liegt als der das Glas zuführende Kanal, wird oft die Bezeichnung "Gießen" anstelle von "Walzen" verwendet, um eine Abgrenzung zum Verfahren "Walzen von Glas" mit Verringerung der Blattdicke eines bereits vorher hergestellten Glasbandes zu ermöglichen.

An die formgebenden Walzen werden hohe Anforderungen gestellt. Deren Oberfläche muss
a) in der Phase des Glaskontakts hohen Temperaturen und chemischen Einflüssen des auf sie auftreffenden Glasbandes und
b) beim Übergang zwischen den Phasen, in denen die Walzen mit Glas kontaktiert sind und den Phasen, in denen kein Glaskontakt besteht schroffem Temperaturwechsel
standhalten.

Die Temperaturwechsel ergeben sich aus der Wasserkühlung der Hauptwalze. Sie ist notwendig weil dem ankommenden Glasband in kurzer Zeit eine große Wärmemenge entzogen werden muss damit das Glasband nach Verlassen der Hauptwalze an seinen Außenflächen viskos genug ist, um eine ausreichende eigene Formstabilität bei Übergang auf den Rollenkühlofen zu besitzen.

Für das Glasband auf dem Ziehstein wie auf der Ziehwalze wird über die gesamte Breite die gleiche Temperatur angestrebt. Das ist in der Realität nicht erreichbar und nur durch zusätzliche Maßnahmen wie zusätzliche Beheizung oder gezielte lokale Kühlung oder durch Strahlungsabschirmung je nach Aufwand und Präzision der Einstellmöglichkeiten mehr oder weniger gut erreichbar.

Es gibt einen engen Bereich der Temperatur bzw. Viskosität der Glasoberfläche, bei dem
- einerseits noch kein Kleben des Glases an der Walze,
- andererseits noch keine erhebliche Rissbildung der Glasoberfläche auftritt,
so dass eine qualitätsgerechte Produktion möglich ist. Die Qualität dieser Oberfläche ist schlechter als die einer feuerpolierten Oberfläche. Daher gibt es verschiedene Ansätze und Möglichkeiten die Beeinträchtigung der Oberflächenqualität durch den Kontakt mit dem Formgebungswerkzeug, sei es als Walze, Rolle oder Teil der Kühlbahn zu verringern.

Dieses Temperaturfenster ist entsprechend der Glasart durch eine dazugehörige Viskosität der Glasoberfläche im Kontakt mit der Ziehwalze in der Größenordnung von ca. 10⁹ Pa.s gegeben. Die Oberfläche der Walze muss in ihrer Temperatur immer unter der Klebetemperatur liegen.

Die schroffen Temperaturwechsel führen zu hohen thermischen Spannungen in den Ziehwalzen und zu relativ kurzer Lebensdauer weil die Oberfläche der Walzen bald so beschädigt ist dass eine hohe Oberflächenqualität nicht mehr erreichbar ist. Damit ist ein regelmäßiger Einbau neuer bzw. regenerierter Walzen notwendig.

Diese Methode zur Formgebung erfordert einen regelmäßigen Austausch mindestens der zwei Ziehwalzen und ist einerseits mit hohen Kosten verbunden. Wenn nicht ständig die richtige Oberflächentemperatur der Walzen erreicht wird, werden andererseits auch Qualitätsmängel an der Glasoberfläche als Rauhigkeit oder Unebenheit und dadurch teilweiser Ausfall der Produktion auftreten. Das kann besonders bei Änderung des Durchsatzes bzw. der Blattdicke geschehen.

Der Glasfluss wird bei den bekannten Verfahren auch durch die Maße des Spalts zwischen den beiden Hauptwalzen und durch ihre Drehgeschwindigkeit beeinflusst. Nach Verlassen des Spalts zwischen den zwei Hauptwalzen findet eine Rückerwärmung der vorher stärker abgekühlten Glasoberflächen statt.

Nach Verlassen der Ziehwalzen und Übergabe auf die Rollenbahn des Kühlofens ist die Formgebung im Wesentlichen abgeschlossen. Die Wärmebilanz muss so beeinflusst werden dass kein zu großer Durchhang des Glasbandes auf der Rollenbahn auftritt.

Bei einem in JP 63 139 020 A1 beschriebenen Verfahren fließt das Glas über einen an der Oberseite abgedeckten und mit Platin ausgekleideten Vorherd auf eine abwärts geneigte Ausflusslippe und von dort in den Spalt zwischen zwei darunter liegenden Ziehwalzen. In dieser Zone verbreitert sich das Glasband während die Glasbadtiefe gleichzeitig sinkt. Die Glaszufuhr zum Reservoir vor dem Ziehstein erfolgt von oben über ein Rohr. Verwendet werden zwei Walzen, wobei in dem zwischen ihnen gebildeten Spalt die Formgebung und Einstellung der Geometrie des Glasbandes erfolgt.

In der in WO 2004/00739 A1 beschriebenen Lösung fließt das Glas über einen abwärts geneigten Ziehstein auf eine horizontale Ziehbahn. Deren das Glasband tragende Oberfläche besteht aus vielen hinreichend kurzen ebenen Segmenten. Durch eine oberhalb der Ziehbahn liegende Walze kann der Auftreffpunkt des Glasbandes auf der Ziehbahn beeinflusst werden. Damit erfolgt die Urformgebung im Spalt zwischen der Ziehbahn und der darüber sitzenden Ziehwalze. Die Ziehbahn enthält oberhalb einer tragenden Unterlage eine das Glasband stützende Schicht mit vielen kleinen Öffnungen und Nuten, durch die Dampf durch die stützende Unterlage nach oben strömt und durch Bildung eines Dampfpolsters das Gleiten des Glasbandes beim Transport auf der Ziehbahn unterstützt. Damit werden Beschädigungen der Oberfläche des Glasbandes weitgehend unterdrückt.

Bei der in EP 15 16 858 A1, beschriebenen Lösung fließt das Glas über einen abwärts geneigten Ziehstein auf einer S-förmigen Bahn, welche beim Passieren eines Paars von Ziehwalzen entsteht, auf eine horizontale Ziehbahn. Deren das Glasband tragende Oberfläche besteht aus vielen hinreichend kurzen ebenen Segmenten. Die Ziehbahn enthält oberhalb einer tragenden Unterlage eine das Glasband stützende Schicht mit vielen kleinen Öffnungen und Nuten, durch die Dampf durch die stützende Unterlage nach oben strömt und durch Bildung eines Dampfpolsters das Gleiten des Glasbandes beim Transport auf der Ziehbahn unterstützt. Nach Verlassen des mit Dampf gestützten Bereichs wird das Glasband von einem Rollenkühlofen übernommen. Diese Erfindung verwendet ein Paar Ziehwalzen beidseitig des Glasbandes.

In der in der Offenlegungsschrift US 2005/0109061 A1 beschriebenen Lösung fließt das Glas über einen abwärts geneigten Ziehstein auf eine horizontale Ziehbahn. Deren das Glasband tragende Oberfläche besteht aus vielen hinreichend kurzen ebenen Segmenten.

Durch eine oberhalb der Ziehbahn liegende Walze kann der Auftreffpunkt des Glasbandes auf der Ziehbahn beeinflusst werden. Damit erfolgt die Urformgebung im Spalt zwischen der Ziehbahn und der darüber sitzenden Ziehwalze.

Die Ziehbahn enthält oberhalb einer tragenden Unterlage eine das Glasband stützende Unterlage mit vielen kleinen Öffnungen und Nuten, durch die Dampf durch die stützende Unterlage nach oben strömt und durch Bildung eines Dampfpolsters das Gleiten des Glasbandes beim Transport auf der Ziehbahn unterstützt. Damit werden Beschädigungen der Oberfläche des Glasbandes weitgehend unterdrückt.

Die Abkühlung des Glasbandes wird hauptsächlich auf dieser speziellen Ziehbahn verwirklicht. Nach Verlassen des mit Dampf gestützten Bereichs wird das Glasband von einem Rollenkühlofen übernommen. Diese Erfindung verwendet eine Walze oberhalb des Glasbandes, wobei das Glasband zwischen dieser und einer darunter liegenden Ziehbahn geführt wird.

Aus der JP 2005206417 A ist ein Verfahren zum Formen von Flachglas bekannt, bei dem geschmolzenes Glas von einer Führung einem Spalt zwischen zwei rotierenden, hitze-resistenten Walzen zum Verfestigen zu einem Bandglas zugeführt wird. Ein Zuführungsteil ist aus einem Platin enthaltenden Metall hergestellt, öffnet sich graduell in Richtung der Formwalzen und weist eine Form mit einem offenen Oberteil auf. Das Zuführungsteil wird elektrisch beheizt. Gleichzeitig wird das geschmolzene Glas im Oberteil des Zuführungsteils von oben her beheizt, um es auf einer Temperatur zu halten, die um 50 bis 100 °C höher ist als die Temperatur der flüssigen Phase von Glas. Die Vorrichtung zum Formen von Flachglas weist eine Energieversorgung auf, die mit dem Zuführungsteil verbunden ist, um es elektrisch zu beheizen und die Temperatur des geschmolzenen Glases in der Breite-Richtung zu steuern. Die Vorrichtung zum Formen von Flachglas weist weiter ein Heizmittel zum Erhitzen des geschmolzenen Glases in einem Bereich des offenen Oberteils des Zuführungsteils von oben und zum Steuern der Temperatur auf.

Aus der DE 10 2005 019 646 A1 ist eine Vorrichtung zum Überführen von Glasschmelze von einem Aufbereitungsbereich zu einem Floatbad bekannt, mit einem Zuführrohr auf einem Niveau oberhalb des Niveaus des Floatbades und mit einer Übergangsrampe von dem Niveau des Zuführrohres auf das Niveau des Floatbades. Um die Vorrichtung so auszugestalten, dass sie in der Lage ist auch deutlich höher schmelzendes Borosilikatglas, wie es für LCD-Flachbildschirme Verwendung findet, thermisch und chemisch homogen und in hoher optischer Qualität herzustellen, wird vorgeschlagen, dass zwischen Zuführrohr und Übergangsrampe ein Übergangsrohr vorgesehen ist, das sich mit der Fließrichtung trichterförmig erweitert und das durch Hindurchleiten von Strom direkt beheizbar ist.

Aus der US 2005/0178159 A1 ist eine Vorrichtung zur Herstellung von dünnem Flachglas bekannt, umfassend einen Formkörper einschließlich eines Hauptkörpers mit einer nach unten konvergierenden Querschnittsform, wobei der Hauptkörper so ausgebildet ist, dass er Ströme geschmolzenen Glases an seinem unteren konvergierenden Kantenabschnitt in ein einziges Glasband zusammenführt. Die Ströme des geschmolzenen Glases fließen nach unten sowohl entlang der Oberfläche des Hauptkörpers als auch der Kantenglieder. Die Kantenglieder sind ausgebildet, um eine Breite des geschmolzenen Glases zu begrenzen. Das durch den Formkörper geformte Glasband wird nach unten gezogen, um das dünne Flachglas zu bilden. Die Vorrichtung beinhaltet weiter ein Nicht-Kontakt-Stützglied, das in der Nähe des unteren konvergierenden Kantenabschnitts des Hauptkörpers angeordnet ist, wobei das Nicht-Kontakt-Stützglied ausgebildet ist, um eine dünne Glasschicht auf seiner Stüt-Oberfläche zu bilden. Das Glasband wird über seine gesamte Breite nichtkontaktierend in einem Verlauf, in dem das Glasband nach unten gezogen wird, durch das Nicht-Kontakt-Stützglied gestützt.

Der Erfindung liegt die Aufgabe zugrunde, ein Verfahren und eine Vorrichtung zur Herstellung von Flachglas anzugeben, welche es ermöglichen, Blattdicken zwischen 0,5 und 12 mm bei guter Konstanz und hoher Gleichmäßigkeit der Blattdicke über der Breite zu erzeugen. Die Formung eines Glasbandes mit hoher Oberflächenqualität und Ebenheit soll erreicht werden, sodass der Aufwand zum Schleifen oder Polieren zur Erreichung einer planen Oberfläche stark verringert oder unnötig wird.

Die Aufgabe wird erfindungsgemäß mit einem Verfahren, welches die in die im Anspruch 1 angegebenen Merkmale aufweist, und mit einer Vorrichtung, welche die im Anspruch 7 angegebenen Merkmale aufweist, gelöst.

Vorteilhafte Ausgestaltungen sind Gegenstand der Unteransprüche.

Die Glasschmelze verlässt den Vorherdkanal und eine geneigte Fläche des Ziehsteins unter dem Einfluss der Schwerkraft. Sie bildet dabei einen zur Formgebung genutzten freien Durchhang, bevor sie auf eine Ziehwalze oder eine gleitende Unterlage trifft. Die Ziehwalze oder gleitende Unterlage werden mit Fluiden gekühlt.

Der freie Durchhang des Glasbandes wird durch Änderung der Position der Ziehwalze oder der gleitenden Unterlage in seiner vertikalen und horizontalen Ausdehnung so eingestellt, dass die gewünschte Blattdicke und Viskosität des Glasbandes bei Auftreffen auf die Ziehwalze oder die gleitende Unterlage erreicht wird.

Eine vorteilhafte Ausgestaltung sieht vor, dass die Dicke und die Geschwindigkeit des Glasbandes durch Einstellung des Durchflusses im Vorherdkanal und auf dem geneigten Ziehstein durch Einstellen
- der Temperatur der Glasschmelze in Heizzonen, mit Hilfe von Kühleinrichtungen und Heizeinrichtungen,
- Verstellen der Höhe eines vor dem Ziehstein liegenden blendenartigen Strömungsbegrenzers und
- der Länge des freien Durchhangs des Glasbandes vor der Ziehwalze oder der gleitenden Unterlage
justiert werden.

Die Gleichmäßigkeit der Dicke des Glasbandes über dessen Breite kann durch Kühleinrichtungen und/oder Heizeinrichtungen im Stein unterhalb des Strömungsbegrenzers und/oder Heizmodule im Ziehstein und/oder Verändern der horizontalen Position des Strömungsbegrenzers geregelt werden.

Eine weitere vorteilhafte Ausgestaltung des Verfahrens sieht vor, dass die Temperaturverteilung der Glasschmelze im Bereich des Ziehstein durch Kühleinrichtungen und zonenweise einstellbare Heizeinrichtungen unterhalb, oberhalb und seitlich des Vorherdkanals einstellbar ist um mit Hilfe der Temperatur- und Geschwindigkeitsverteilung der Glasmasse lokale Ungleichmäßigkeiten der Dicke des Glasbandes über der Breite korrigieren zu können.

Eine weitere Ausgestaltung sieht vor, dass die Ziehwalze oder die gleitende Unterlage das Glasband an seiner unteren Oberfläche gerade so stark abkühlt, dass eine weitgehend glatte Oberfläche erreicht wird.

Eine Feinjustierung der Temperaturverteilung und/oder der Dickenverteilung im Glasbad kann auch durch lokale Kühleinrichtungen und Heizeinrichtungen unter Verwendung von Luft und/oder Fluiden im Boden des Vorherdkanals unterhalb des Strömungsbegrenzers erfolgen.

Die Vorrichtung zur Durchführung des Verfahrens enthält eine Ziehwalze oder eine gleitende Unterlage, welche mit einem Fluid gekühlt wird, eine Höhenverstellung für die Ziehwalze oder die gleitende Unterlage, Mittel zur Einstellung der Temperatur der Glasschmelze in einzelnen Heizzonen, mit Hilfe von Kühleinrichtungen und Heizeinrichtungen sowie einen vor dem Ziehstein liegenden, in seiner Höhe verstellbaren Strömungsbegrenzer.

Eine vorteilhafte Ausgestaltung sieht vor, dass im Vorherdkanal unter dem Strömungsbegrenzer Kühleinrichtungen und/oder Heizeinrichtungen und im Ziehstein Heizmodule angeordnet sind.

Weiter ist es vorteilhaft, den Ziehstein im Bereich der Kontaktflächen zum Glas mit einer korrosionshemmenden oder korrosionsfesten Schicht zu versehen.

Vorzugsweise ist das Ende des Ziehsteins als Kante mit einem Winkel von weniger als 80 Grad ausgebildet.

Ferner ist die erfindungsgemäße Vorrichtung so gestaltet, dass der Ziehstein eine lippenähnliche Kante aufweist und ganz oder mindestens nahe der lippenähnlichen Kante in den Bereichen, welche Kontakt zum Glas haben, mit einer Schicht oder einer Verkleidung aus Edelmetall versehen ist oder dass der Ziehstein unterhalb seiner lippenähnlichen Kante über deren Länge mit einem Band aus Edelmetall versehen ist. Die Kante kann durch elektrischen Strom direkt beheizt werden.

Eine weiter vorteilhafte Ausgestaltung entsteht dadurch, dass der Strömungsbegrenzer im Vorherdkanal vor dem Ziehstein mit Korrosion hemmende Materialien mindestens im Bereich des Glaskontakts beschichtet oder verkleidet ist.

Die Erfindung zeichnet sich durch eine Reihe von Vorteilen aus. Hierzu zählen insbesondere:

Da nur eine Ziehwalze oder gleitende Unterlage zur Urformgebung benötigt wird, können Kosten gespart und zudem die problematische Beeinflussung der Oberflächenqualität des Glasbandes zumindest auf einer Seite deutlich gemindert werden. Das gelingt insbesondere dadurch, dass die Beeinflussung von Blattdicke und Durchsatz mit nur einer Ziehwalze oder gleitenden Unterlage in Zusammenwirken mit der Neigung des Ziehsteins und einer angepassten Temperaturverteilung auf dem Ziehstein erfolgt.

Beeinträchtigungen der Oberflächenqualität des Glasbandes durch den Kontakt mit dem Strömungsbegrenzer können vermieden werden, weil dessen Oberfläche durch das ständig vorbeifließende Glas langsam erodiert wird,
- mit Hilfe einer hohen Glastemperatur im Bereich Ziehstein nach dem Strömungsbegrenzer, die für den Ausgleich der Unebenheiten sorgen kann,
- durch Beschichtung des Strömungsbegrenzers mit korrosionshemmendem Material.

Die Schaffung einer Mehrzahl zonenweise und unabhängig voneinander anwendbarer Justiermöglichkeiten für die Temperatur- Geschwindigkeits- und Dickenverteilung des Glasbandes im Bereich ab Vorherd bis zum Ende des Ziehsteins erlaubt es, flexibel auf lokale Ungleichmäßigkeiten der Wanddicke Einfluss zu nehmen.

Ein Merkmal ist die Anwendung eines freien Durchhangs ab Ziehlippe bis zum Auftreffen auf die Ziehwalze oder gleitenden Unterlage als Werkzeug zur Formgebung und Abkühlung. Durch eine kleine Walze oberhalb des freien Durchhangs wird berührend bei nur geringem Anpressdruck auf das Glasband eine Vergleichmäßigung der Temperaturverteilung im Glasband über dessen Breite erreicht.

Die Erfindung wird im Folgenden anhand eines Ausführungsbeispiels näher erläutert.

In den zugehörigen Zeichnungen zeigen:
- Figur 1: eine Seitenansicht der Vorrichtung im Bereich vom Strömungsbegrenzer bis zur Kühlbahn,
- Figur 2: eine Draufsicht der Vorrichtung vom Ende des Vorherds bis zu den Rollen der Kühlbahn,
- Figur 3: den Bereich um den Ziehstein bis zur Ziehwalze in einer Seitenansicht,
- Figur 4: die Schnittdarstellung durch eine Ziehwalze mit Tragkonstruktion und Wasserkühlung
und
- Figur 5, Figur 6: die Fluidkühler unterhalb des Strömungsbegrenzers.

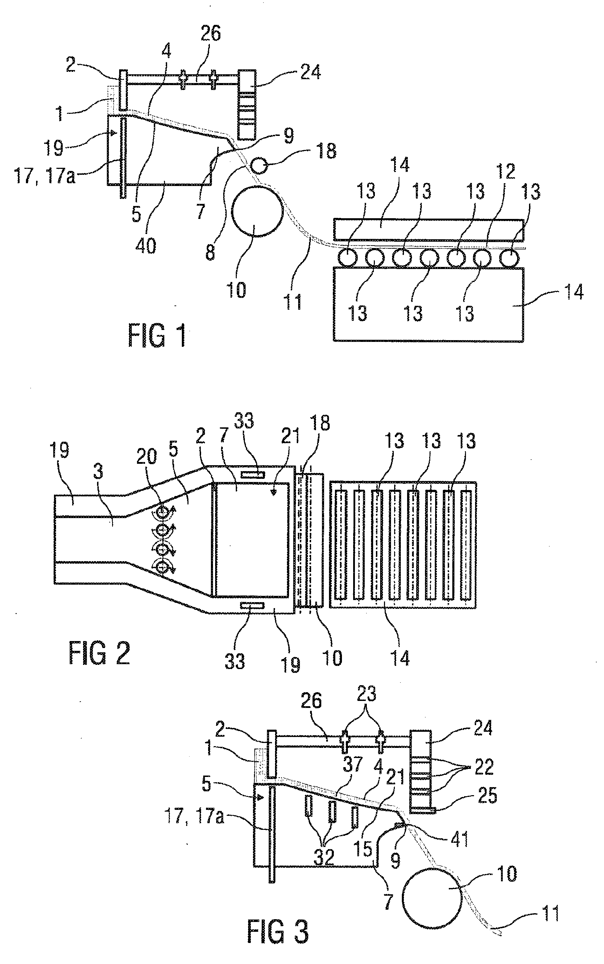

Die **Figuren 1 bis 3** beschreiben Aufbau und Funktionsweise der Vorrichtung.

Das in einer Schmelzanlage erschmolzene Glas wird über einen Speiser- oder Vorherdkanal 3 der Formgebungsanlage zugeführt. Diese formt mit Hilfe
a) einer geneigten Ablauffläche, die als Ziehstein (7) mit Ziehlippe (9) ausgebildet ist,
b) eines freien Durchhangs (8) ab Ziehlippe (9) bis zur Ziehwalze (10) oder gleitenden Unterlage ,
c) einer Ziehwalze (10) oder gleitenden Unterlage
das Glas zu einem Glasband (11) mit einer Breite von bis zu 2 m bei Dicken zwischen 0,5 mm und 12 mm.

Der Kanal 5 verbreitert sich umso mehr, je näher er sich dem Ziehstein 7 nähert. Mit dieser Verbreiterung ist eine starke Änderung der Geschwindigkeitsverteilung der Glasschmelze verbunden.

Die Anpassung auf ein überwiegend ebenes Geschwindigkeitsprofil über der Breite wird durch ein Rührwerk 20 im Kanal 5 unterstützt. Das Rührwerk 20 enthält mindestens zwei Rührer, welche so betrieben werden, dass das Glas in Richtung der Seitenwände 19 gefördert wird. Vorzugsweise besteht das Rührwerk 20 aus vier Rührern in einer Reihe. Alle Rührer der Gruppe fördern das Glas in Richtung der ihnen zuordenbaren Seitenwand 19 des Kanals 5 um die Gleichmäßigkeit der Verteilung des Glasbades und die Homogenität der Glasschmelze zu verbessern.

Die Einstellung des geplanten Durchsatzes erfolgt hauptsächlich im Vorherdkanal 3 mit Hilfe eines blendenähnlichen Strömungsbegrenzers 2. Der Ziehstein 7 ist in dem Bereich, der Glaskontakt hat, mit einem Refraktärmetall, vorzugsweise mit Edelmetall, beschichtet oder verkleidet, um Korrosion zu vermeiden.

Während bei den bekannten Walzverfahren der Spalt zwischen zwei Walzen die Urformung bewirkt, wird bei der erfindungsgemäßen Anordnung nur eine Ziehwalze 10 oder gleitende Unterlage zur Urformgebung in Verbindung mit einem freien Durchhang 8 des Glasbandes 11 vor der Ziehwalze 10 oder gleitenden Unterlage verwendet. Damit kann nur die Unterseite des Glasbandes 11 durch eine stark gekühlte Walze oder gleitende Unterlage in ihrer Oberflächenqualität beeinträchtigt werden.

Die Ziehwalze 10 ist die erste Walze nach dem freien Durchhang 8 und übt eine leicht ziehende Wirkung auf das Glasband 11 aus. Wird eine gleitende Unterlage verwendet, wird die ziehende Wirkung auf das Glasband 11 durch den Kühlofen erreicht.

Die Qualität der Oberfläche des Flachglases kommt einer feuerpolierten Oberfläche nahe. Die Unterseite des Glasbandes 11 kann eine Strukturierung durch die Ziehwalze 10 erhalten, z.B. als Riffelung.

Der Glasfluss wird hauptsächlich durch den Strömungsbegrenzer 2, aber auch durch die Strömungs- und Temperaturbedingungen auf dem Ziehstein 7 und in nur geringem Maße durch die Drehgeschwindigkeit der Ziehwalze 10 beeinflusst.

Nach Verlassen der Ziehwalze 10 oder der gleitenden Unterlage findet eine Rückerwärmung der vorher stärker abgekühlten Glasoberfläche statt. Das heißere Glas im Inneren des Glasbandes 11 erwärmt dabei das oberflächennahe Glas und senkt seine Viskosität. Dieser Effekt ist umso deutlicher, je dicker das Glasband 11 ist.

Die Energiebilanz, besonders die Wärmeabstrahlung, im Bereich ab Ziehlippe 9, im Bereich des freien Durchhangs 8 und auf der Ziehwalze 10 oder gleitenden Unterlage wird so gehalten, dass
- die geplante Geometrie des Glasbandes 11 auf dem Ziehstein 7, im freien Durchhang 8 und im Bereich Walze 10 oder gleitenden Unterkage eingehalten wird,
- die Temperaturen hoch genug sind, um die Viskosität zu gewährleisten, welche die angestrebte Geometrie ergibt und
- nach Verlassen der Ziehwalze 10 oder der gleitenden Unterlage die Formstabilität aufgrund der gekühlten Oberfläche des Glasbandes 11 groß genug ist um den Durchhang des Glasbandes 11 auf der Kühlbahn 14 zwischen den Transportrollen 13 hinreichend klein zu halten.

Die Oberflächentemperatur der Ziehwalze 10 oder der gleitenden Unterlage muss immer unter der Klebetemperatur für das produzierte Glas liegen. Diese Forderung ist für die Walze 10 in den meisten Fällen gut erfüllbar, weil die erforderliche Kühlwirkung der Ziehwalze 10 in der Regel eine noch niedrigere Oberflächentemperatur der Ziehwalze 10 verursacht, welche je nach Durchsatz und Baugröße meist weit unter 600°C liegt. Die Kühlleistung der Walze 10 ist dazu in weiten Grenzen frei einstellbar sein. Das ist durch die Wasserdurchflussrate möglich.

Im Bereich Ziehstein 7 wird durch Erhöhung der Kanalbreite ein Glasband 11 der gewünschten Breite und mit gleichmäßiger Dicke eingestellt und durch ausreichend hohe Temperaturen eine Entglasung wirksam vermieden.

Dazu wird dieser Bereich von oben her durch elektrische Heizmodule 32 und durch Gasbrenner 23, vom Tor 24 aus durch elektrische Heizmodule 22, seitlich durch weitere elektrische Heizmodule 33 und als zusätzliche Möglichkeit durch direkte elektrische Beheizung einer auf dem Ziehstein 7 angebrachten Platinschicht 21 beheizt.

Anstelle einer dünnen Platinschicht 21 kann das Steinmaterial durch eine Verkleidung mit Platinblech geschützt sein, die auch wie die Platinschicht 21 direkt elektrisch beheizt werden kann. Im Bereich der Seitenwand des Ziehsteins 7 angebrachte Stromzuführungen werden als Flansche für hohe Ströme ausgeführt und sind mit einer Spannungsquelle verbunden.

Die elektrische Beheizung des Bodenbereichs mit elektrischen Widerstands-Heizmodulen 32 im Bereich vom Strömungsbegrenzer 2 bis zum Ende des Ziehsteins 7 besteht aus zwei oder mehr Zonen in Strömungsrichtung. Die letzte Heizzone liegt nahe der Ziehlippe 9, wo hohe Wärmeverluste auftreten.

Das Steinmaterial, welches die Seitenwand 19 des Vorherdkanals 3 bildet, kann durch darin angebrachte elektrische Heizmodule 33 im Bereich ab Strömungsbegrenzer 2 bis in den Ziehstein 7 elektrisch beheizt werden.

Die Seitenwände 19 und der Kanalboden 15 im Bereich Ziehstein 7 sind im Bereich mit Glaskontakt mit Platin oder einem anderen Refraktärmaterial beschichtet oder verkleidet um das Feuerfestmaterial vor Korrosion zu schützen.

Der Bereich oberhalb des Glasbades 11 vom Strömungsbegrenzer 2 bis zum Ende des Ziehsteins 7 wird durch Gasbrenner 23 von oben her und seitlich vom Tor 24 aus mit Hilfe von elektrischen Heizmodulen 22 beheizt. Mit Hilfe dieser flexibel zonenweise einstellbaren Beheizung wird sowohl für die geeignete Temperaturverteilung als auch Geschwindigkeitsverteilung im Glasbad 1 auf dem Ziehstein 7 gesorgt.

Im Bereich Ziehstein 7 befindet sich mindestens eine Reihe von Thermoelementen im Steinmaterial nahe der Ziehlippe 9, quer zur Fließrichtung des Glases ausgerichtet, welche die Temperaturverteilung über der Breite des Kanals 5 abbilden und ein Steuersignal für die digitale Steuerung der Heizmodule 32 liefert.

Ebenso befinden sich Reihen von Thermoelementen, quer zur Fließrichtung des Glases ausgerichtet, am Platin der Kanalbeschichtung 21, im Steinmaterial vom Vorherd, im Oberofen 26 über dem Ziehstein 7 und im Tor 24. Zusätzlich wird die Temperatur des Glases an der Ziehlippe 9 und auf der Ziehwalze 10 oder der gleitenden Unterlage pyrometrisch kontrolliert.

Unter dem Strömungsbegrenzer 2 befindet sich im Bodenstein, kurz unter dem Glasbad 1, eine Reihe von Fluidkühlem 17, mit deren Hilfe eine lokal eng begrenzte Feineinstellung der Temperatur der Schmelze im Spalt zwischen Strömungsbegrenzer 2 und Bodenstein möglich ist.

Damit lässt sich Ungleichmäßigkeiten der Wanddicke des Glasbandes 11 mit einer manuellen, oder bei Online-Messtechnik für die Wanddicke, mit einer automatischen Rückwärtsregelung korrigieren. Bei zu geringer Wanddicke des Glasbandes 11 in einem engen Bereich kann man durch Kühlung mittels des lokal zuzuordnenden Kühlelements dort die lokale Wanddicke erhöhen.

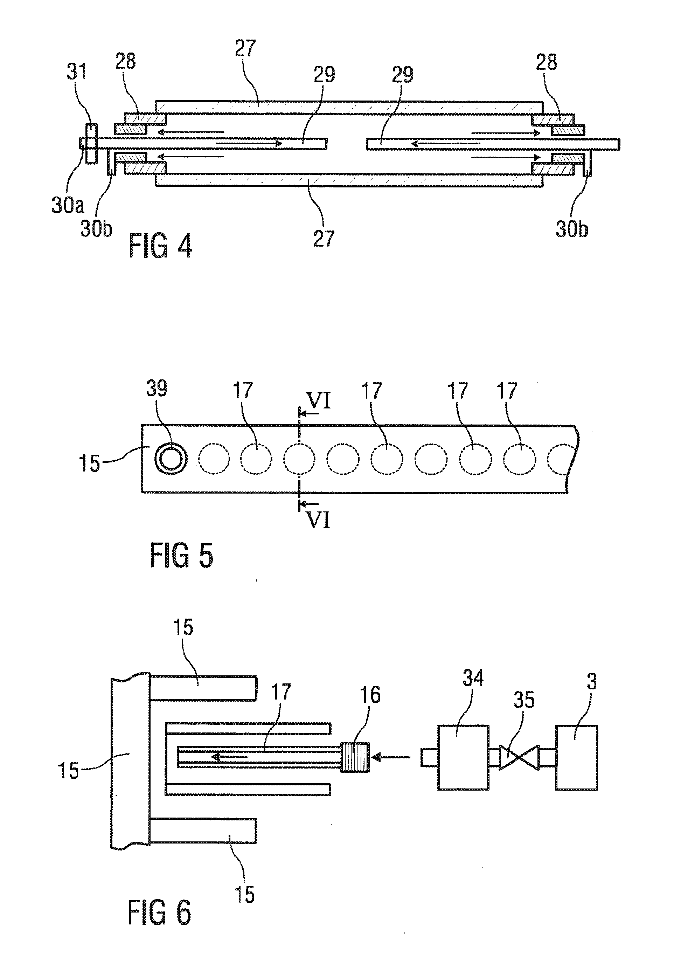

Wie aus **Figur 4** ersichtlich, besteht die wassergekühlte Ziehwalze 10 aus
- einer äußeren Wandung 27, bestehend aus einer Metalllegierung mit hoher thermischer und chemischer Belastbarkeit, wie sie mit Sonderlegierungen und besonderen Edelstählen erreichbar ist, die zur Steigerung von deren Lebensdauer noch mit einer keramischen oder anderen Beschichtung an der Außenoberfläche versehen sein kann,
- einer tragenden Konstruktion 28 aus Edelstahl und/oder Sonderlegierungen, welche die erforderliche mechanische Lagerung der Ziehwalze 10 ermöglicht und die Zuläufe 30a und Abläufe 30b für das Kühlwasser enthält, wobei das Kühlwasser in direktem Wärmekontakt mit der metallischen äußeren Wandung 27 der Ziehwalze 10 steht und die starke Abkühlung des Glasbandes 11 bewirkt,
- und einer hohlen Antriebswelle 29 im Zentrum der tragenden Konstruktion 28, mit Antriebselement 31 welches von einem nicht dargestellten Motor außerhalb der Walze 10, angetrieben wird.

In den **Figuren 5 und 6** ist die Anordnung und Wirkungsweise der unterhalb des Strömungsbegrenzers 2 angeordneten Fluidkühler 17 erläutert.

Die Fluidkühler 17, die in einer Reihe quer zur Strömungsrichtung angeordnet sind, können mit Druckluft oder anderen Fluiden als Kühlmittel betrieben werden. Jedes einzelne Kühlelement ist separat mit Hilfe eines Nadelventils 35 und eines Strömungsmessers 34 je Kühlelement einstellbar. Der erforderliche Druck des Fluids wird durch einen Druckerzeuger bereitgestellt. Er speist einen Vorratsbehälter, an dem je Fluidkühler 17 ein Nadelventil 35 und ein Strömungsmesser 34 angeschlossen ist. Die beiden Fluidkühler 17, die am rechten und linken Rand liegen, werden durch elektrische Heizmodule 32 ergänzt weil die Wärmeverluste dort größer sind.

Mit dieser mehrfachen Möglichkeit der Feineinstellung der Wanddickenverteilung des Glasbandes 11 ist es möglich, ein Glasband mit sehr gleichmäßiger Dicke zu erzeugen. Wenn die Dicke des Glasbandes 11 nicht einheitlich genug über die Breite des Glasbandes 11 ist, kann durch Änderung der Temperatur der einzelnen Zonen oder der Fluidkühler 17 eine Korrektur bewirkt werden.

Dies muss im Zusammenhang mit dem freien Durchhang 8 ab Ziehlippe 9 geschehen, weil die Glasmasse im freien Durchhang 8 einen leichten Zug auf das Glas auf dem Ziehstein 7 ausübt.

Die Möglichkeit der Einwirkung auf die Wanddickenverteilung über der Breite des Glasbandes 11 wurde mehrfach geschaffen um stets die günstigste Einstellmöglichkeit nutzen zu können. Jede Einstellmöglichkeit hat ihren bevorzugten Wirkungsbereich.

Diese können zweckmäßig bei der Planung der Anlage durch Simulation des Geschwindigkeits- und Temperaturfeldes im Bereich vom Ziehstein 7 bis zum Ende des freien Durchhangs 8 geprüft und Startbedingungen geeignet festgelegt werden.

Ein wichtiges Kriterium für die Einstellungen der Heiz- und Kühlmodule ist das Erreichen einer gleichmäßigen Blattdicken- und Temperaturverteilung im Glas am Ende der Ziehlippe 9.

Im freien Durchhang 8 wird durch den frei wählbaren horizontalen und vertikalen Abstand ab Ziehlippe 9 bis zur Ziehwalze 10 die Geometrie des Glasbandes 11 beeinflusst und gleichzeitig durch dosierte Abstrahlung an die Umgebung eine Abkühlung des Glasbandes 11 erreicht.

Die Abstrahlung von Wärme an die Umgebung kann durch Abschirmung, durch Kühleinrichtungen an der Unterkante des Tors 24 und gegebenenfalls durch Heizmodule im Bereich des freien Durchhangs 8, also durch Beeinflussung der Temperaturen der Umgebung, mit denen das Glasband 11 im Strahlungsaustausch steht, beeinflusst werden.

Ein wichtiges Mittel dabei ist das Tor 24, welches die vertikale Begrenzung des Raums über dem Glasband 11 am Ende des Bereichs mit dem Ziehstein 7 bildet. Es besteht aus einer vertikal und horizontal verfahrbaren Wand, welche die Wärmeverluste durch Abstrahlung der Glasmasse auf dem Ziehstein 7 stark verringert. An der Unterkante des Tors 24 gibt es nur einen schmalen Spalt, durch den eine Abstrahlung an die Umgebung möglich ist.

Im Tor 24 sind in mindestens drei Ebenen elektrischer Heizmodule 22 eingebaut, mehrere Module horizontal je Ebene, welche den Wärmebedarf im Bereich oberhalb des Ziehsteins 7 decken helfen und für eine gleichmäßige Temperaturverteilung über der Kanalbreite sorgen.

Bei zu starker Abkühlung lässt sich kein Glasband 11 mit hoher Ebenheit herstellen. Wenn die Abkühlung zu gering ist, kann es zum Kleben auf der Walze 10 kommen, deren Oberfläche wird beschädigt und als Folge dessen wird die Qualität der produzierten Glasoberfläche schlechter.

Bei zu geringer Abkühlung sind Durchsatz und Geometrie des Glasbandes 11 nicht im erforderlichen Maße steuerbar und es tritt ein unerwünschter Durchhang des Glasbandes zwischen den Transportrollen 13 der Kühlbahn 14 auf.

Eine größere Lauflänge des Glasbandes 11 ab Ziehlippe 9 bis zur Ziehwalze 10 oder der gleitenden Unterlage, also eine tiefere Position der Ziehwalze 10 oder der gleitenden Unterlage, führt zu einem dünneren und stärker abgekühltem Glasband 11 und senkt die Temperatur, mit der das Glasband 11 auf die Ziehwalze 10 oder die gleitende Unterlage auftrifft.

Eine kürzere Lauflänge des Glasbandes 11 ab Ziehlippe 9 bis zur Ziehwalze 10 oder der gleitenden Unterlage, also eine höhere Position der Ziehwalze 10 oder der gleitenden Unterlage, führt zu einem dickerem und weniger abgekühltem Glasband 11 beim Auftreffen auf die Ziehwalze 10 oder die gleitende Unterlage.

Der Bediener der Anlage kann durch
- Justierung der vertikalen und horizontalen Position der Ziehwalze 10 oder der gleitenden Unterlage,
- Wahl der Abkühlbedingungen des Glasbandes 11 im freien Durchhang 8, die durch die Heizmodule 22, 32 oder die Wasserkühler 25 frei wählbar sind, und
- die geeignete Wahl der Viskosität bzw. Temperatur an der Ziehlippe 9,
die Dicke des Glasbandes 11 und bei festgelegten Durchsatz, die Ziehgeschwindigkeit gemäß der Kontinuitätsgleichung einstellen.

Im Kontakt mit der Ziehwalze 10 oder der gleitenden Unterlage ist eine starke Abkühlung des Glasbandes 11 für Gläser mit einer Dicke von mehr als 3 mm notwendig. Dazu müssen die Temperaturgradienten dort hoch sein. Die Oberfläche der Ziehwalze 10 oder der gleitenden Unterlage kann je nach Glasart und Betriebsbedingungen Temperaturen im Bereich von ca. 300 bis 600°C annehmen.

Wenn die Abkühlung des Glasbandes 11 zu stark ist wird sich kein Glasband 11 mit hoher Ebenheit herstellen lassen. Es besteht die Gefahr einer Welligkeit der Glasoberfläche, bekannt als "Fließwellen", bei Kontakt mit der Ziehwalze 10 oder der gleitenden Unterlage. Bei zu hoher Viskosität der Schmelze an der Glasoberfläche im Kontakt zur Ziehwalze 10 oder der gleitenden Unterlage kann es zur Bildung von Mikrorissen an der Glasoberfläche kommen. Wenn die Abkühlung zu gering ist wird es zum Kleben auf der Ziehwalze 10 oder der gleitenden Unterlage kommen und deren Oberfläche wird beschädigt. Folge dessen ist eine unzureichende Qualität der Oberfläche im Glasband 11.

Mit der Vorrichtung wird eine hohe Oberflächenqualität erreicht, indem
- das Glasband 11 mit höherer Temperatur im Vergleich zu anderen Walzverfahren die Ziehlippe 9 passiert und den freien Durchhang 8 erreicht, um einerseits noch keine Entglasung an der Ziehlippe 9 selbst bei kristallisationsfreudigen Gläsern zuzulassen und andererseits eine hohe Oberflächenqualität des Glasbandes 11 ohne Kontakt zu die Oberflächengüte negativ beeinflussenden Flächen zu erreichen und
- im freien Durchhang 8 eine starke Abkühlung erfolgt, welche ein Auftreffen auf die Ziehwalze 10 oder der gleitenden Unterlage mit einer (im Vergleich zu anderen bekannten Walzverfahren) niedrigeren Temperatur ermöglicht und so die Beschädigung der Glasoberfläche bei der schroffen Abkühlung auf der Ziehwalze 10 oder der gleitenden Unterlage verringert.

Auf dem edelmetallbeschichteten Ziehstein 7 wird die Temperatur des Glasbandes 11 in Abhängigkeit mit der Formgebungstemperatur so hoch gehalten wie es die Bedingungen der Formgebung im freien Durchhang 8 zulassen um eine Ausheilung von Oberflächendefekten zu ermöglichen, die beim Kontakt mit dem Strömungsbegrenzer 2 vor dem Ziehstein 7 auftreten können.

Im Bereich der Ziehlippe 9 befindet sich im Ziehstein 7 ein elektrisch beheiztes Edelmetallband, welches trotz der Abstrahlungsverluste eine ausreichend hohe Temperatur des Glasbandes 11 an der Ziehlippe, auch zum Schutz vor Entglasung, ermöglicht.

Im Bereich des freien Durchhangs 8 des Glasbandes 11 wird mit Hilfe einer kleinen schwächer gekühlten Glättungswalze 18 bei sehr niedrigem Anpressdruck auf die obere Seite des Glasbandes 11 und Strahlungswärmeaustausch zwischen Glättungswalze 18 und Glasband 11 eine Vergleichmäßigung der Temperaturverteilung auf der Oberfläche des Glasbandes 11 erreicht. Diese Wirkung ist am besten, wenn die oberhalb des freien Durchhangs 8 angeordnete Glättungswalze 18 näher an der Ziehwalze 10 als an der Ziehlippe 9 liegt. Dadurch wird bis zum Erreichen der Glättungswalze 18 eine starke Abkühlung an der Oberseite des Glasbandes 11 erreicht und nachfolgend vor dem Erreichen der Ziehwalze 10 oder der gleitenden Unterlage eine Vergleichmäßigung der Temperaturverteilung auf der Oberfläche des Glasbandes 11 und somit eine Verringerung der Tendenz zur Bildung einer "Orangenhaut" und eine glättende Wirkung auf die obere Fläche des Glasbandes 11 ausgeübt.

Durch Wahl der Position der Glättungswalze 18 zwischen Ziehlippe 9 und Ziehwalze 10 oder der gleitenden Unterlage und Variation des grundsätzlich sehr niedrigen Anpressdrucks kann die Stärke der Kühlwirkung und der Glättungswirkung beeinflusst werden.

### BEZUGSZEICHENLISTE

- 1: Glasbad
- 2: Strömungsbegrenzer
- 3: Vorherdkanal
- 4: Glasoberfläche nach dem Strömungsbegrenzer
- 5: Kanal mit Verbreiterung
- 7: Ziehstein
- 8: freier Durchhang des Glasbandes vor der Ziehwalze
- 9: Ziehlippe des Ziehsteins
- 10: Ziehwalze
- 11: Glasband
- 12: Glasband im Kühlofen
- 13: Transportrollen
- 14: Kühlbahn
- 15: feuerfester Boden des Kanals
- 16: Fluidzuführung
- 17: Fluidkühler unterhalb des Strömungsbegrenzers
- 17a: Kühlmodule im Ziehstein
- 18: Glättungswalze
- 19: Seitenwand des Kanals
- 20: Rührwerk
- 21: Platinschicht auf dem Ziehstein
- 22: elektrische Heizmodule im Tor
- 23: Gasbrenner im Oberofen über dem Ziehstein
- 24: Tor
- 25: Wasserkühler im Tor
- 26: Oberofen
- 27: äußere Wandung der Ziehwalze
- 28: tragende Konstruktion der Ziehwalze
- 29: Antriebswelle mit Wasserzuführung
- 30a: Wasserzulauf
- 30b: Wasserablauf
- 31: Antrieb der Ziehwalze
- 32: elektrische Heizmodule unterhalb des Kanalbodens
- 33: elektrische Heizmodule seitlich des Kanals
- 34: Strömungsmesser
- 35: Nadelventil
- 37: Glasband auf dem Ziehstein
- 39: Heizelement im Boden unter dem Strömungsbegrenzer
- 40: Unterbau
- 41: Edelmetallheizband

## Patentansprüche

1. Verfahren zur Herstellung von Flachglas mit einem Gießverfahren unter Verwendung einer Schmelzeinrichtung, eines Vorherdkanals (3) zur Zuführung einer Glasschmelze zu einer Formgebungseinrichtung, bei dem die Glasschmelze ein Glasband (11) führendes Walzen- und Rollensystem (13) zufließt, wobei das Glasband (11) von dem Vorherdkanal (3) bis zu einem Ziehstein (7) eine Verbreiterung auf die vorgesehene Breite des zu produzierenden Glasbandes (11) bei sinkender Glasbandtiefe erfährt,
**dadurch gekennzeichnet, dass**
- das von einer Schmelzwanne kommende Glasbad (1) im Vorherdkanal (3) mit Hilfe von Heiz- und Kühleinrichtungen auf eine Temperatur abgekühlt wird, die 10 bis 150 K über der Formgebungstemperatur liegt.
- die Glasschmelze nach Verlassen des Vorherdkanals (3) und einer geneigten Fläche des Ziehsteins (7) unter dem Einfluss der Schwerkraft einen zur Formgebung genutzten freien Durchhang (8) bildet, bevor sie auf nur eine Ziehwalze (10) oder eine gleitende Unterlage trifft, welche mit Fluiden gekühlt wird,
- wobei der freie Durchhang (8) des Glasbandes (11) durch Änderung der Position der Ziehwalze (10) oder der gleitenden Unterlage in seiner vertikalen und horizontalen Ausdehnung so eingestellt wird, dass die gewünschte Blattdicke und Viskosität des Glasbandes (11) bei Auftreffen auf die Ziehwalze (10) oder der gleitenden Unterlage erreicht wird, wobei die Beeinflussung von Blattdicke und Durchsatz mit der nur einen Ziehwalze (10) oder gleitenden Unterlage in Zusammenwirken mit der Neigung des Ziehsteins (7) und einer angepassten Temperaturverteilung auf dem Ziehstein (7) erfolgt.

2. Verfahren nach Anspruch 1, **dadurch gekennzeichnet, dass** die Dicke und die Geschwindigkeit des Glasbandes (11) durch Einstellung des Durchflusses im Vorherdkanal (3) und auf dem geneigten Ziehstein (7) justiert wird, durch Einstellen
- der Temperatur der Glasschmelze (1) in Heizzonen, mit Hilfe von Kühleinrichtungen (17, 25) und Heizeinrichtungen (21, 22, 23, 32, 33),
- Verstellen der Höhe eines vor dem Ziehstein (7) liegenden blendenartigen Strömungsbegrenzers (2) und
- der Länge des freien Durchhangs (8) des Glasbandes (11) vor der Ziehwalze (10) oder der gleitenden Unterlage.

3. Verfahren nach Anspruch 1 oder 2, **dadurch gekennzeichnet, dass** die Gleichmäßigkeit der Dicke des Glasbandes (11) über dessen Breite geregelt wird durch
- Kühleinrichtungen (17) und/oder Heizeinrichtungen im Stein unterhalb des Strömungsbegrenzers (2) und/oder
- Heizmodule (32) im Ziehstein (7) und/oder
- Verändern der horizontalen Position des Strömungsbegrenzers (2).

4. Verfahren nach einem der vorhergehenden Ansprüche, **dadurch gekennzeichnet, dass** die Temperaturverteilung der Glasschmelze im Bereich des Ziehstein (7) durch Kühleinrichtungen (17), (25) und zonenweise einstellbare Heizeinrichtungen (21, 22, 23, 32, 33) unterhalb, oberhalb und seitlich des Vorherdkanals (3) einstellbar ist um mit Hilfe der Temperatur- und Geschwindigkeitsverteilung der Glasmasse lokale Ungleichmäßigkeiten der Dicke des Glasbandes über der Breite korrigieren zu können,

5. Verfahren nach einem der vorhergehenden Ansprüche, **dadurch gekennzeichnet, dass** die Ziehwalze (10) oder die gleitende Unterlage das Glasband (11) an seiner unteren Oberfläche gerade so stark abkühlt, dass eine weitgehend glatte Oberfläche erreicht wird.

6. Verfahren nach einem der vorhergehenden Ansprüche, **dadurch gekennzeichnet, dass** durch lokale Kühleinrichtungen (17) und Heizeinrichtungen (17a) unter Verwendung von Luft und/oder Fluiden im Boden des Vorherdkanals (3) unterhalb des Strömungsbegrenzers (2) eine Feinjustierung der Temperaturverteilung und/oder der Dickenverteilung im Glasbad (1) erfolgt.

7. Vorrichtung zur Herstellung von Flachglas mit einem Gießverfahren mit einer Schmelzeinrichtung, einem Vorherdkanal (3) zur Zuführung einer Glasschmelze zu einer Formgebungseinrichtung, wobei die Breite des Vorherdkanals (3) sich vor dem Ziehstein (7) erweitert, einem Rührwerk (20), welches vor einem Strömungsbegrenzer (2) angeordnet ist, und einen Ziehstein (7), der eine geneigte Fläche aufweist, **dadurch gekennzeichnet, dass** die Vorrichtung enthält
- nur eine Ziehwalze (10) oder eine gleitende Unterlage, welche mit einem Fluid gekühlt wird und auf die die Glasschmelze nach der Formgebungseinrichtung trifft,
- eine Höhenverstellung für die Ziehwalze (10) oder die gleitende Unterlage
- Mittel zur Einstellung der Temperatur der Glasschmelze (1) in einzelnen Heizzonen, mit Hilfe von Kühleinrichtungen (17), (25) und Heizeinrichtungen (21, 22, 23, 32, 33)
- einen vor dem Ziehstein (7) liegenden, in seiner Höhe verstellbaren Strömungsbegrenzer (2),
- wobei der Ziehstein (7) eine lippenähnlichen Kante (9) aufweist und ganz oder mindestens nahe der lippenähnlichen Kante (9) in den Bereichen die Kontakt zum Glas haben, mit einer Schicht oder einer Verkleidung aus Edelmetall (21) versehen ist.

8. Vorrichtung nach Anspruch 7, **dadurch gekennzeichnet, dass** im Vorherdkanal (3) unter dem Strömungsbegrenzer (2) Kühleinrichtungen (17) und im Ziehstein (7) Heizmodule (32) angeordnet sind

9. Vorrichtung nach Anspruch 7 oder 8, **dadurch gekennzeichnet, dass** der Ziehstein (7) im Bereich der Kontaktflächen zum Glas mit einer korrosionshemmenden oder korrosionsfesten Schicht versehen ist.

10. Vorrichtung nach einem der Ansprüche 7 bis 9, **dadurch gekennzeichnet, dass** das Ende des Ziehsteins (7) als Kante (9) mit einem Winkel von weniger als 80 Grad ausgebildet ist.

11. Vorrichtung nach einem der Ansprüche 7 bis 10, **dadurch gekennzeichnet, dass** der Ziehstein (7) unterhalb seiner lippenähnlichen Kante (9) über deren Länge mit einem Band aus Edelmetall versehen ist, die durch elektrischen Strom direkt beheizt werden kann.

12. Vorrichtung nach einem der Ansprüche 7 bis 11, **dadurch gekennzeichnet, dass** der Strömungsbegrenzer (2) im Vorherdkanal (3) vor dem Ziehstein (7) mit Korrosion hemmende Materialien mindestens im Bereich des Glaskontakts beschichtet oder verkleidet ist.

## Claims

1. A method for manufacturing flat glass with a casting method using a melting apparatus, a forehearth channel (3) for feeding a glass melt to a forming apparatus in which the glass melt flows to a roller system (13) conducting a glass ribbon, while the glass ribbon (11), from the forehearth channel (3) to a drawing die (7), undergoes a width expansion to the width provided for the glass ribbon (11) to be produced with reducing glass ribbon depth,
**characterized in that**
- the glass melt (1) coming from a melter is cooled down to a temperature, which is between 10 and 150 K above the forming temperature, using heating and cooling systems in the forehearth channel (3).
- after leaving the forehearth channel (3) and an inclined surface of the drawing die (7), the glass melt, under the influence of gravity, forms a free sag (8) used for forming before it encounters only one forming roll (10) or a sliding base which is cooled using fluids,
- while the free sag (8) of the glass ribbon (11) is adjusted in terms of its vertical or horizontal extension by changing the position of the forming roll (10) or of the sliding base such that the desired sheet thickness and viscosity of the glass ribbon (11) is attained when arriving at the forming roll (10) or the sliding base, while influence on sheet thickness and throughput is exerted with the only one forming roll (10) or sliding base in co-operation with the inclination of the drawing die (7) and an adapted temperature distribution on the drawing die (7).

2. A method as claimed in claim 1, **characterized in that** the thickness and velocity of the glass ribbon (11) is adjusted by setting the flow in the forehearth channel (3) and on the inclined drawing die (7), by setting
- the temperature of the glass melt (1) in heating zones with the help of cooling systems (17, 25) and heating systems (21, 22, 23, 32, 33),
- re-adjusting the height of an orifice-type flow restrictor (2) located upstream of the drawing die (7) and
- the length of the free sage (8) of the glass ribbon (11) upstream of the forming roll (10) or the sliding base.

3. A method as claimed in claim 1 or 2, **characterized in that** the regularity of the thickness of the glass ribbon (11) over its width is controlled by
- cooling systems (17) and/or heating systems in the die below the flow restrictor (2) and/or
- heating modules (32) in the drawing die (7) and/or
- changing the horizontal position of the flow restrictor (2).

4. A method as claimed in any preceding claim, **characterized in that** the temperature distribution of the glass melt in the area of the drawing die (7) is adjustable using cooling systems (17), (25) and heating systems adjustable by zone (21, 22, 23, 32, 33) below, above and by the sides of the forehearth channel (3) so as to be able and correct local irregularities in the thickness of the glass ribbon over the width with the help of temperature and velocity distribution.

5. A method as claimed in any preceding claim, **characterized in that** the forming roll (10) or the sliding base cools down the glass ribbon (11) at is lower surface just to such extent that a largely smooth surface is obtained.

6. A method as claimed in any preceding claim, **characterized in that** a fine adjustment of temperature distribution and/or thickness distribution is obtained in the melt (1) by local cooling systems (17) and heating systems (17a) using air and/or fluids in the bottom of the forehearth channel (3) below the flow restrictor (2).

7. An apparatus for the manufacture of flat glass using a casting method with a melting apparatus, a forehearth channel (3) for feeding a glass melt to a forming apparatus, while the width of the forehearth channel (3) expands upstream of the drawing die (7), an agitator (20), which is located upstream of a flow restrictor (2), and a drawing die (7), which has an inclined area, **characterized in that**, the apparatus contains
- only one forming roll (10) or a sliding base, which is cooled using a fluid, and hit by the glass melt downstream of the forming apparatus,
- a height adjuster for the forming roll (10) or the sliding base,
- means for adjusting the temperature in the glass melt (1) in individual heating zones with the help of cooling systems (17, 25) and heating systems (21, 22, 23, 32, 33),
- a flow restrictor (2) located upstream of the drawing die (7) and having an adjustable height,
- while the drawing die (7) presents an edge (9) similar to a lip and is provided with a layer or cladding made of precious metal (21) fully or at least near the edge (9) similar to a lip in the areas which have contact to the glass.

8. An apparatus as claimed in claim 7, **characterized in that** cooling systems (17) are arranged in the forehearth channel (3) under the flow restrictor (2) and heating modules (32) are arranged in the drawing die (7).

9. An apparatus as claimed in claim 7 or 8, **characterized in that** the drawing die (7) is provided with a corrosion-inhibiting or corrosion-resistant layer in the area of the contact surfaces to the glass.

10. An apparatus as claimed in any claim 7 through 9, **characterized in that** the end of the drawing die (7) is designed as an edge (9) having an angle of less than 80 degrees.

11. An apparatus as claimed in any claim 7 through 10, **characterized in that** the drawing die (7) is provided, below its edge (9) similar to a lip and over the length of such edge, with a strip made of precious metal which can be heated directly by electric current.

12. An apparatus as claimed in any claim 7 through 11, **characterized in that**, in the forehearth channel (3) upstream of the drawing die (7), the flow restrictor (2) is coated or cladded with corrosion-inhibiting materials at least in the area of the glass contact.

## Revendications

1. Procédé de fabrication de verre plat par un processus de coulée recourant à un dispositif de fusion, à un canal d'avant-creuset (3) pour l'amenée d'une masse de verre en fusion à un dispositif de formage, la masse de verre en fusion aboutissant à un système de formage à cylindres et rouleaux (13) produisant une bande de verre (11), la bande de verre (11) étant soumise à un élargissement à la largeur prévue pour la bande de verre (11) à produire, depuis le canal d'avant-creuset (3) jusqu'à une filière (7), alors que diminue la profondeur de la bande de verre,
**caractérisé**
- **en ce que** le bain de verre (1) provenant d'une cuve de vitrification est refroidi dans le canal d'avant-creuset (3) au moyen de dispositifs de chauffage et de refroidissement, à une température supérieure de 10 à 150 K à la température de formage,
- **en ce qu'**après avoir quitté le canal d'avant-creuset (3) et une surface inclinée de la filière (7) sous l'effet de la gravité, la masse de verre en fusion présente une flèche libre (8) exploitée pour le formage, avant d'arriver sur un seul cylindre étireur (10) ou un support glissant refroidi par des fluides,
- la flèche libre (8) de la bande de verre (11) est réglée par modification de la position du cylindre étireur (10) ou du support glissant dans son extension verticale et horizontale de manière à obtenir l'épaisseur de feuille et la viscosité souhaitées pour la bande de verre (11) à l'arrivée sur le cylindre étireur (10) ou le support glissant, l'épaisseur de feuille et le débit étant influencés par l'unique cylindre étireur (10) ou le support glissant en coopération avec l'inclinaison de la filière (7) et une répartition adaptée de température sur la filière (7).

2. Procédé selon la revendication 1, **caractérisé en ce que** l'épaisseur et la vitesse de la bande de verre (11) sont ajustées par réglage du débit dans le canal d'avant-creuset (3) et sur la filière (7) inclinée, en réglant
- la température de la masse de verre en fusion (1) dans des zones de chauffe, au moyen de dispositifs de refroidissement (17, 25) et de dispositifs de chauffage (21, 22, 23, 32, 33),
- la hauteur d'un limiteur de débit (2) type diaphragme, situé devant la filière (7), et
- la longueur de la flèche libre (8) de la bande de verre (11) devant le cylindre étireur (10) ou le support glissant.

3. Procédé selon la revendication 1 ou la revendication 2, **caractérisé en ce que** la régularité de l'épaisseur de la bande de verre (11) est régulée sur la largeur de celle-ci par
- des dispositifs de refroidissement (17) et/ou des dispositifs de chauffage dans la filière en dessous du limiteur de débit (2) et/ou
- des modules de chauffage (32) dans la filière (7) et/ou
- par modification de la position horizontale du limiteur de débit (2).

4. Procédé selon l'une des revendications précédentes, **caractérisé en ce que** la répartition de température de la masse de verre en fusion est réglable au niveau de la filière (7) par des dispositifs de refroidissement (17), (25) et des dispositifs de chauffage (21, 22, 23, 32, 33) réglables par zones en dessous, au-dessus et à côté du canal d'avant-creuset (3), pour pouvoir corriger des inégalités locales d'épaisseur de la bande de verre sur la largeur de celle-ci au moyen de la répartition de température et de vitesse de la masse de verre.

5. Procédé selon l'une des revendications précédentes, **caractérisé en ce que** le cylindre étireur (10) ou le support glissant refroidit la bande de verre (11) sur sa surface inférieure avec une intensité telle qu'une surface pratiquement lisse est obtenue.

6. Procédé selon l'une des revendications précédentes, **caractérisé en ce qu'**un réglage de précision de la répartition de température et/ou de la répartition d'épaisseur dans le bain de verre (1) est réalisé par des dispositifs de refroidissement (17) et des dispositifs de chauffage (17a) locaux recourant à de l'air et/ou à des fluides dans le fond du canal d'avant-creuset (3) en dessous du limiteur de débit (2).

7. Installation de fabrication de fabrication de verre plat par un processus de coulée recourant à un dispositif de fusion, à un canal d'avant-creuset (3) pour l'amenée d'une masse de verre en fusion à un dispositif de formage, le canal d'avant-creuset (3) s'élargissant devant la filière (7), à un mécanisme agitateur (20) disposé devant un limiteur de débit (2), et à une filière (7) présentant une surface inclinée, **caractérisée en ce que** ladite installation comprend
- un cylindre étireur (10) ou un support glissant refroidi par un fluide et sur lequel arrive la masse de verre en fusion après le dispositif de formage,
- un réglage de hauteur pour le cylindre étireur (10) ou le support glissant,
- un moyen de réglage de la température de la masse de verre en fusion (1) dans différentes zones de chauffe, par des dispositifs de refroidissement (17), (25) et des dispositifs de chauffage (21, 22, 23, 32, 33),
- un limiteur de débit (2) situé devant la filière (7), de hauteur réglable,
- la filière (7) présentant un bord (9) en forme de lèvre et étant pourvue d'une couche ou d'un revêtement en métal noble (21), dans sa totalité ou au moins à proximité du bord (9) en forme de lèvre dans les zones en contact avec le verre.

8. Installation selon la revendication 7, **caractérisée en ce que** des dispositifs de refroidissement (17) sont disposés dans le canal d'avant-creuset (3) sous le limiteur de débit (2) et des modules de chauffage (32) sont disposés dans la filière (7).

9. Installation selon la revendication 7 ou la revendication 8, **caractérisée en ce que** la filière (7) est pourvue d'une couche inhibitrice de corrosion ou résistante à la corrosion au niveau des surfaces de contact avec le verre.

10. Installation selon l'une des revendications 7 à 9, **caractérisée en ce que** l'extrémité de la filière (7) est réalisée comme bord (9) avec un angle inférieur à 80 degrés.

11. Installation selon l'une des revendications 7 à 10, **caractérisée en ce que** la filière (7) est pourvue en dessous de son bord (9) en forme de lèvre et sur la longueur de celui-ci, d'une bande en métal noble pouvant être directement chauffée par courant électrique.

12. Installation selon l'une des revendications 7 à 11, **caractérisée en ce que** le limiteur de débit (2) est revêtu ou habillé de matériaux inhibiteurs de corrosion dans le canal d'avant-creuset (3) devant la filière (7), au moins dans la zone de contact avec le verre.
